# EUROPEAN PATENT APPLICATION

(11) **EP 1 560 317 A2**
(43) Date of publication of application: **03.08.2005**
(21) Application number: 05250197.0
(22) Date of filing: 14.01.2005
(51) Int. Cl.: H02K 19/38

(54) **Brushless exciter with electromagnetically decoupled dual excitation systems for starter-generator applications**

(30) Priority: 27.01.2004 US 766341
(71) Applicant: GENERAL ELECTRIC COMPANY, Schenectady, NY 12345 (US)
(72) Inventor: Shah, Manoj Ramprasad, Latham New York 12110 (US); Osama, Mohamed, Niskayuna New York 12309 (US); Garces, Luis Jose, Niskayuna New York 12309 (US)
(74) Representative: Pedder, James Cuthbert

(57) **Abstract**

A synchronous electric machine (400) having a rotor member (170) and a stator member (180) having a stator core (150) is provided. The electric machine (400) further includes a main machine (410) having a DC rotor field winding (126) mounted on the rotor member (170); and a dual AC/DC excitation system (412) for the synchronous machine (400). The excitation system (412) includes a rotatable polyphase armature winding (124) in electrical communication with a rectifier assembly (428) for conducting direct current to the rotor field winding (126)of the main machine (410), and a plurality of DC salient poles (152) and at least one AC salient pole (172) both included in the stator core (150). Respective AC salient poles (172) of the at least one AC salient pole (172) are disposed between adjacent DC salient poles (152) of the plurality of DC salient poles (152). A plurality of DC field coils are disposed on respective DC salient poles (152) of the plurality of DC salient poles (152), where the DC field coils are connected together to constitute at least one DC field winding (122). The at least one AC field coil is disposed respectively on the at least one AC salient pole (172). At least one AC field coil is connected together to constitute at least one alternate current field winding (162). A magnetic axis of respective AC field coils is disposed substantially in electromagnetic space-quadrature relation with respect to magnetic axes of adjacent DC field coils, wherein when the respective AC field coils are energized; an alternating current is induced in the polyphase armature winding (124) for providing excitation to the main machine (410).

## Description

The present disclosure relates to brushless excitation systems, and particularly to decoupled dual alternating current/direct current (AC/DC) excitation systems for starter generator applications.

Starter-Generator systems are used to start and run prime movers that are not self-starting, e.g., a synchronous machine connected to a large inertia load, such as a generator, gas turbine prime mover, aircraft engine, etc. U.S. Patent No. 4,093,869, entitled "QUADRATURE AXIS FIELD BRUSHLESS EXCITER", issued to Hoffmann et al., on June 6, 1978, describes a brushless exciter for starting a large synchronous dynamoelectric machine, for example, a large synchronous generator. Electrical means are provided for accelerating a rotor member of a synchronous dynamoelectric machine which is mechanically connected via a rotor shaft to a high inertia load without utilizing auxiliary starting devices such as induction motors and diesel engines.

Direct current (DC) field excitation is provided to a stator field winding of the main machine, independently of the speed of the rotor shaft, for providing sufficient excitation output capability for starting purposes with the rotor shaft at zero speed or very low speeds, where the output is derived by the transformer induction principle. To accomplish this object, a brushless dual alternating current/direct current excitation exciter generator is provided having both an alternating current (AC) exciter and a direct current (DC) exciter winding. The DC exciter includes a plurality of salient poles which are radially disposed and spaced apart. A DC field winding is provided, including a DC coil wound about each salient pole.

The AC exciter includes an AC field winding including AC coils, wrapped around an air core and interposed between adjacent salient poles. The magnetic axis of each AC field winding is arranged in space-quadrature relation with respect to the magnetic axis of an adjacent DC field winding so that the AC field which is created when the AC field winding is energized will not induce voltage into the DC field winding which is typically inactive during the starting period. AC excitation is applied until rotation of the rotor member of the synchronous machine has accelerated to a speed at which the DC winding excitation is possible, after which the DC excitation is applied.

A large air gap in the flux path during AC excitation detracts from magnetic inductance. Its resultant electromagnetic coupling to an exciter armature winding necessitates a large AC field ampere-turn requirement to achieve the needed starting torque. The high power requirements arising from this need for large AC field ampere-turns results in undesirably bulky AC/DC excitation systems. Furthermore, the air core of the AC winding does not contribute to the desired inductance, magnetic flux or electromagnetic coupling, and accordingly does not contribute to reducing the size of the AC/DC excitation system.

Accordingly, there is a need for a more compact excitation system in which magnetizing currents are reduced, the required main machine field current is provided in an efficient manner, loss thereof is minimized, and the size of the AC and/or DC systems are reduced.

In one embodiment of the present invention, a synchronous electric machine is provided having a rotor member and a stator member having a stator core. The electric machine further includes a main machine having a direct current (DC) rotor field winding mounted on the rotor member and a dual alternating current/direct current (AC/DC) excitation system for the synchronous machine. The excitation system includes a rotatable polyphase armature winding in electrical communication with a rectifier assembly for conducting direct current to the rotor field winding, and a plurality of DC salient poles and at least one alternating current (AC) salient pole, both included in the stator core. Respective AC salient poles are disposed between adjacent DC salient poles. The excitation system further includes at least one DC field winding, each DC field winding having at least one DC field coil disposed on at least one DC salient pole of the plurality of DC salient poles. At least one AC field winding is provided, each AC field winding having at least one AC field coil disposed on at least one AC salient pole of the at least one AC salient pole. A magnetic axis of respective AC field coils is disposed substantially in space-quadrature relation with respect to magnetic axes of adjacent DC field coils, wherein when the respective AC field coils are energized, an alternating voltage is induced in the polyphase armature winding for providing excitation to the main machine.

In another embodiment of the present invention, an electric machine is provided including a shaft; a rotatable armature winding disposed on the shaft; and a stator member having a stator core. The stator core includes a plurality of salient poles thereon concentrically disposed about and spaced apart from the armature winding, where the plurality of salient poles include a plurality of DC salient poles and at least one AC salient pole, wherein respective AC salient poles of the at least one AC salient pole are disposed between adjacent DC salient poles of the plurality of DC salient poles. The machine further includes a DC field coil disposed on respective DC salient poles of the plurality of DC salient poles, where the DC field coils are connected together to constitute a DC field winding; and at least one AC field coil disposed respectively on the at least one AC salient pole, where the magnetic axes of the at least one AC field coil are disposed substantially in space quadrature relation with respect to the magnetic axes of the DC field coils, and where energizing the AC or DC field coils provides excitation to the electric machine for rotating the shaft.

In still another embodiment of the present invention, a method is provided for accelerating a rotor member of a synchronous machine from rest to a predetermined speed of rotation. The method includes the steps of exciting an AC winding of an excitation system of the machine with a single phase alternating current for magnetizing at least one AC salient pole supported on a stator of the machine, the at least one AC salient pole supporting the AC winding, where the polarity of the magnetized at least one AC salient pole varies over time in accordance with the variation of the polarity of the single phase alternating current, for inducing alternating current within a rotor armature winding of the excitation system.

The method further includes the steps of rectifying AC output by the rotor armature winding for providing direct current; providing the direct current to a rotor field winding of a main machine of the machine for establishing a static magnetic field; applying a polyphase alternating current to a stator armature winding of the main machine for establishing a dynamic, rotating magnetic field, where the phase relationship between the static magnetic field and the dynamic, rotating magnetic field causes application of a torque on the rotor element for causing rotation of the rotor element; and continuously increasing the frequency of the applied polyphase alternating current until the rotor member has accelerated to the predetermined speed of rotation.

The invention will now be described in greater detail, by way of example, with reference to the drawings, in which:-
FIG. 1 is a partial cross-sectional view of a prior art brushless excitation system;
FIG. 2 is a partial electrical schematic diagram of the prior art excitation system of FIG. 1;
FIG. 3 is a schematic diagram of an electric machine having a main machine and a brushless excitation system;
FIG. 4 is a cross-sectional view of support structures of the electric machine and excitation system of FIG. 3;
FIG. 5 is a partial sectional view of the electric machine and excitation system of FIG. 3; and
FIG. 6 is a partial electrical schematic diagram of the excitation system of FIG. 3.

Embodiments of the present invention will be described herein below with reference to the accompanying drawings. In the following description, well-known functions or constructions are not described in detail to avoid obscuring the invention in unnecessary detail. Throughout the figures, like reference numerals represent like elements.

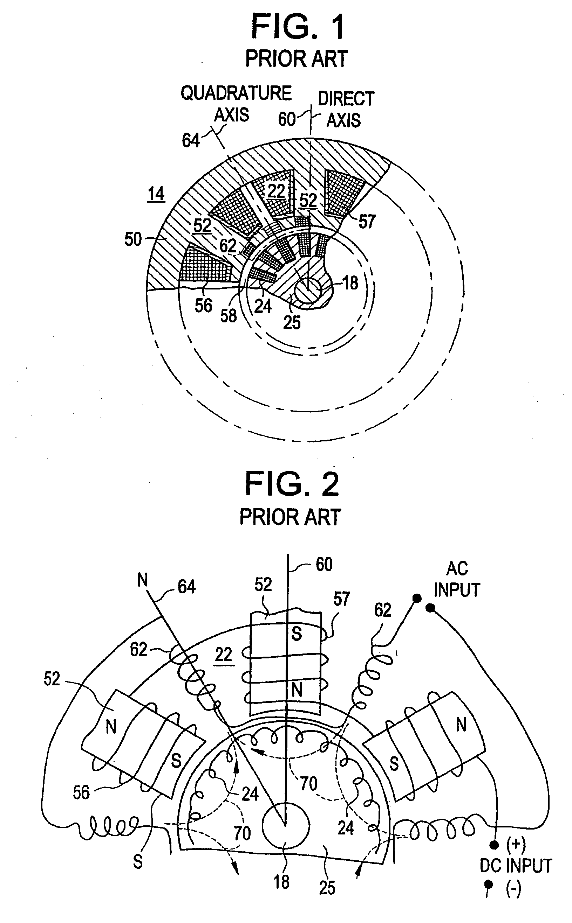

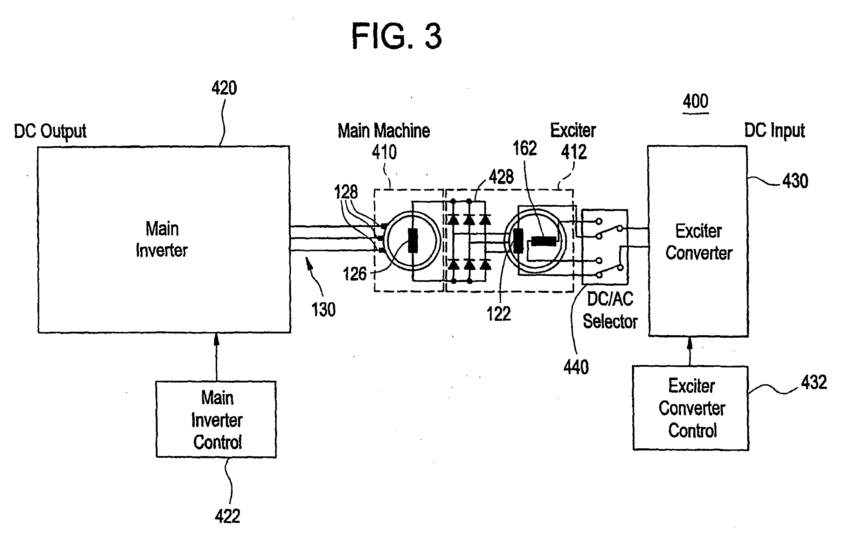

U.S. Patent No. 4,093,869, entitled "QUADTRATURE AXIS FIELD BRUSHELSS EXCITER", issued to Hoffmann et al., on June 6, 1978 describes a prior art dual alternating current/direct current (AC/DC) excitation exciter with reference to prior art FIGS. 1 and 2 (which correspond respectively with FIGS. 2 and 3 of U.S. Patent No. 4,093,869). An exciter direct current (DC) field winding 56 and an exciter alternating current (AC) field winding 62 are supported by a stator core 50 on annular stator member 14. More specifically, DC field coils 57 of the DC field winding 56 are wound about respective salient pole portions 52 which are concentrically disposed and spaced apart from an excitation polyphase armature winding 24.

AC field coils of the AC field winding 62 are each wound about an air core, with each AC field coil interposed between adjacent ones of the salient poles, with its magnetic axis being disposed substantially in space-quadrature relation with respect to the direct axis 60, or magnetic axis, of an adjacent DC field coil 57. The quadrature axis of the AC field winding 62 is indicated by the dashed line 64. Turns of individual AC field coils are embedded in slots located near the center portion of a pole face of an adjacent salient pole and are extended through the space which lies between adjacent salient pole portions 52.

The brushless excitation system of the electric machine of the present disclosure differs from the excitation system of U.S. Patent No. 4,093,869 in that the inventive excitation system is provided with salient poles about which the AC field windings are wound. The stator core is laminated for making excitation with AC poles possible, preventing overheating, for increasing magnetizing inductance and magnetic flux by maximizing desired electromagnetic coupling. Accordingly, the salient poles associated with the AC windings and the salient poles associated with the DC windings are laminated. The excitation system is connected to a main synchronous machine (e.g., a motor) for starting and running an inertia load, and/or generating electrical power via the main synchronous machine when connected to a prime mover, such as a gas turbine.

The brushless excitation system of the present disclosure is an inside-out wound-rotor system. As known in the art, the term inside-out wound-rotor system refers to a configuration in which an exciter armature winding is mounted on a rotor member of the electric machine, and at least one excitation field winding is mounted on a stator member of the electric machine. The brushless excitation system provides excitation to the main machine at zero and low mechanical speeds by transformer action, where the DC excitation winding is not effective.

FIG. 3 shows an embodiment of a synchronous electric machine 400 having a synchronous main machine 410 and a synchronous exciter machine, here shown as an exemplary inside-out wound-rotor excitation system 412. It is contemplated that another configuration for an electric machine may be used in which the excitation system includes both AC and DC field windings. The excitation system 412 is shown to include AC field winding 162 and DC field winding 122, which are carried by the stator of the electric machine. Upon energizing the AC field winding 162, excitation is provided to a multiphase (in particular embodiments tri-phase) armature winding (not shown) mounted on a shaft (not shown) of a rotor of the electric machine. The excitation armature winding rotates, causing a diode bridge (rectifier assembly) 428 to rotate, which converts generated alternating current into direct current which is output for excitation of a rotor field winding 126 of the main machine 410 for establishing a magnetic field. A polyphase alternating current is provided to a stator armature winding 128 of the main machine 410 via conductors 130 for establishing a dynamic, rotating magnetic field. Within the main machine 410, dynamic, rotating magnetic field interacts with the magnetic field for causing a torque that causes rotation of the rotor member. In particular embodiments, the speed of rotation of the rotor or a component thereof is monitored.

In the example provided, a main inverter block 420 controlled by a main inverter controller 422 is provided for processing output by the main machine 410, and for providing the polyphase alternating current to the stator armature winding 128 of the main machine 410. An exciter converter block 430 controlled by an exciter converter controller 432 is provided for providing input to the excitation system 412, including providing AC and DC power inputs, and including providing control signals to an DC/AC selector 440 connected to the excitation system 412. The DC/AC selector 440 selectively energizes one of the AC or DC field windings with the provided AC or DC power, respectively, where the AC field windings are deactivated and the DC field windings are activated once the rotation of the rotor has reached a predetermined speed.

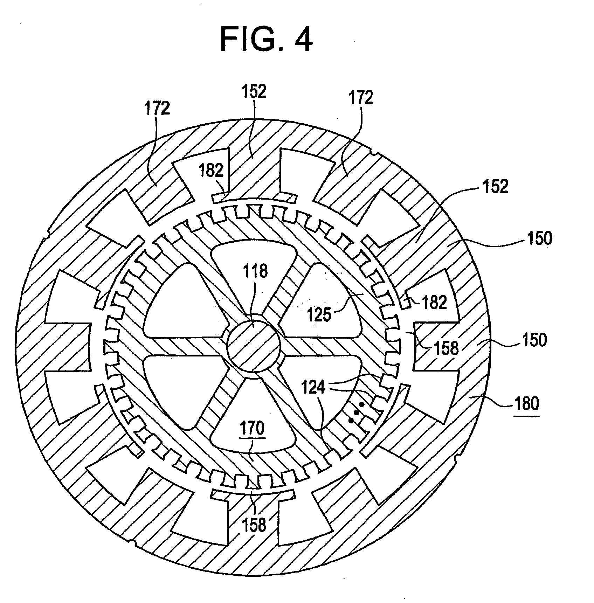

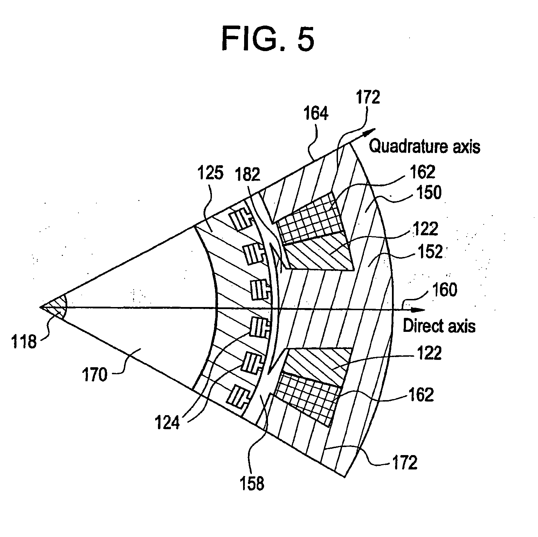

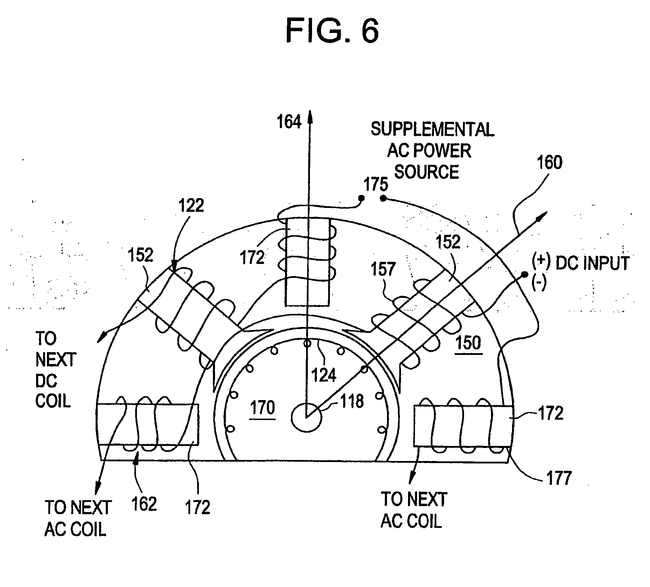

With reference to FIGS. 4, 5 and 6, the excitation system 412 and related components are shown. Both the DC field winding 122 and the AC field winding 162 are carried by a stator member 180, where the AC field winding 162 is mounted with a displacement of 90 electrical degrees with respect to the DC field winding 122 to eliminate any undesirable magnetic coupling between the DC field winding 122 and AC field winding 162.

A rotor member 170 and associated rotor core 125 are shown mounted on a shaft 118. The stator member 180 is shown to have a stator core 150 carrying a plurality of DC salient poles 152, and a plurality of AC salient poles 172 which alternate with respective DC salient poles 152, all of which extend radially to form an array of poles concentrically disposed and spaced apart with respect to the armature winding 124 mounted on the rotor member 170. In particular embodiments, the plurality of DC salient poles 152 and the plurality of AC salient poles 172 each include an even number of poles.

The DC field winding 122 includes at least one winding having a DC field coil 157 encircling each of the DC salient poles 152, where for multiple DC coils the DC field coils 157 are connected in series, parallel or a combination thereof (depending on voltage and current ratings of its DC power source) to form the DC field winding 122. The AC field winding 162 (functioning as an induction starting coil) includes at least one winding having an AC field coil 177 encircling each of the AC salient poles 172 which are interposed between adjacent ones of the DC salient poles 152, and where for multiple AC coils, the AC coils 177 are connected in series, parallel or a combination thereof (depending on voltage and current rating of its AC power source) to form the AC field winding 162. The magnetic axis of each AC field coil 177 is disposed substantially in electromagnetic space-quadrature (90 electrical degrees), hereafter referred to as space-quadrature, relation with respect to the direct axis 160, or magnetic axis, of an adjacent DC field coil 157, with the quadrature axis of the AC field winding 162 indicated by the line 164. Due to the space-quadrature relation, the AC field which is created when the AC field winding 162 is energized will not induce voltage into the DC field winding 122 which is typically inactive during the starting period.

In particular embodiments, the DC and AC salient poles 152, 172 are both formed of iron core having magnetic laminations, and in specific embodiments high permeability laminations, forming excitation electromagnets, for increasing magnetization and inductance, allowing for an improved magnetic flux generation. By wrapping the AC field winding 162 around the AC salient poles 172, electromagnetic coupling to the armature winding 124 is maximized and voltage and current requirements for delivering DC current to the main machine 410 are thus minimized. The inclusion of the laminated AC salient poles 172 further enables construction of the machine 400 such that an air gap 158 is minimized, thus increasing magnetizing inductance, and thereby electromagnetic coupling of the AC field winding 162 to the armature winding 124.

In particular embodiments, an inner portion of at least one of the first and AC salient pole portions may be extended for providing a flared extension 182, for providing additional mechanical support to the AC field windings 172 and/or DC field windings 162. Further, the DC salient poles 152 and AC salient poles 172 may be the same or different with reference to their shape and the air gaps formed thereby.

In particular embodiments, the DC field coils 157 and AC field coils 177 are formed of copper. The DC field coils 157 and/or AC field coils 177 may be insulated in accordance with design choice. An insulator 186 may be provided between adjacent AC field coils 157 and DC field coils 177 for providing insulation therebetween. In particular embodiments, the AC field windings 162 are single phase windings. The DC field coils 157 and AC field coils 177 may be next to each other and close to each other, but may not directly contact one another. In addition, the DC field coils 157 and AC field coils 177 may be the same or different with respect to the coil size and number of turns per coil.

The first and AC salient poles 152, 172 and AC field windings 172 and DC field windings 162 are sized and shaped through optimization in accordance with the application and space requirements (e.g., start power requirements, losses and magnetic field requirement for generating the desired mechanical torque) and the AC and DC power availability. By sizing and shaping the high permeability laminated iron first and AC salient poles 152, 172 accordingly, magnetizing currents are reduced, enhancing the capability to provide a highly efficient main machine field current with respect to loss and space. Accordingly, a compact power-dense and economical brushless exciter is provided having a wide range of application specific starting and generating requirements. Furthermore, the structure of the stator member 180 and rotor member 170 in combination is mechanically more robust due to provision of the AC salient poles 172. A non-conducting, non-metallic wedge is provided between the DC salient poles 152 and the AC salient poles 172. The wedge may function as a heat sink for improving heat transfer capabilities of the electric machine 400.

In operation, and with further reference to FIGS. 3-6, during the starting period, a supplemental AC power source of the exciter converter 430 supplies alternating current to the AC field winding 162 at a convenient frequency, for example 60 Hz or higher, and of sufficient magnitude to supply adequate DC excitation to the main machine rotor field winding 126. A voltage is induced within the armature winding 124 by means of the transformer induction principle so that rotation of the shaft 118 is not required to produce DC excitation of the main machine rotor field winding 126. A resulting AC current is then rectified by the rectifier assembly 428 and provided as DC current to the main machine rotor field winding 126, for establishing a static magnetic field.

Once the static magnetic field is established by the direct current through the main machine rotor field winding 126, the main machine 410 is excited synchronously by applying polyphase alternating current to the stator armature winding (not shown), which establishes a rotating magnetic field which interacts with the initially static magnetic field established by the main machine rotor field winding 126 for establishing a dynamic magnetic field which rotates at a speed proportional to the frequency of the applied excitation. The frequency of the applied excitation is increased from substantially zero cycles per second to a higher frequency, proportional to the prime mover rotating speed, until the shaft 118 has been accelerated to a predetermined speed of rotation.

Rotation of shaft 118 is brought up to a speed sufficient to enable the power of a prime mover (typically 30-40% of the rated maximum speed) to achieve the acceleration needed for maintaining operating speed. During the described start-up period, the AC salient poles 172 are magnetized, establishing a plurality of magnetic poles of alternating polarity, where the polarity varies over time in accordance with the variation of the polarity of the AC current in the AC field winding 162. The DC field winding 122 is not energized during the starting period, and is therefore not magnetized at that time.

The AC excitation is applied up to a predetermined speed, at which point, a controller disables excitation of the AC field windings 162 and enables excitation of the DC field windings 122 via DC input 184 of the exciter converter 430. AC current generated within in the stator of the main machine 410 interacts with the synchronously rotating field generated by the current in the DC field winding 122 so that the main machine 410 continues accelerating the prime mover up to the point that it can start generating accelerating torque on its own, at which point the synchronous main machine 410 can change its function of working as starter to working as a generator. Due to the large electrical time constant of the main machine field windings, the transition from AC excitation to DC excitation occurs in a smooth manner, without unwanted disturbances in the generated torque.

It is envisioned that the plurality of AC salient poles 172 includes at least one AC salient pole 172 about which is wound respectively an AC field coil 177, where the AC field winding 162 may include AC field coils 177 wound about respective AC salient poles of the at least one AC salient pole 172 in combination with free standing AC field coils 177 (i.e., not wound around a salient pole) that are disposed between adjacent DC salient poles 152 and supported by means other than the at least one AC salient pole 172, such as by slots within the adjacent DC salient poles 152.

In one embodiment of the present disclosure, a power generating station is provided having a plurality of gas turbine generating units. A single converter and a single auxiliary AC power source may be used to start a plurality N of the gas turbine prime mover in turn, each of the associated synchronous generators having a brushless exciter which has been modified with the quadrature axis AC starting winding and associated laminated pole. This combination eliminates the need for an individual starter for each gas turbine, which greatly reduces the capital expenditure which would otherwise accrue.

## Claims

1. A synchronous electric machine (400) having a rotor member (170) and a stator member (180) having a stator core (150), the electric machine (400) comprising:
a main machine (410) having a direct current rotor field winding (126) mounted on the rotor member (170); and
a dual AC/DC excitation system (412) for said synchronous machine (400) comprising:
a rotatable polyphase armature winding (124) in electrical communication with a rectifier assembly (428) for conducting direct current to said rotor field winding (126);
a plurality of DC salient poles (152) and at least one AC salient pole (172) both included in the stator core (150), wherein respective AC salient poles (172) of the at least one AC salient pole (172) are disposed between adjacent DC salient poles (152) of the plurality of DC salient poles (152);
a plurality of DC field coils (157) disposed on respective DC salient poles (152) of said plurality of DC salient poles (152), said DC field coils (157) being connected together to constitute at least one direct current field winding (122); and
at least one AC field coil (177) disposed respectively on the at least one AC salient pole (172), said at least one AC field coil (177) being connected together to constitute at least one alternate current field winding (162), a magnetic axis of respective AC field coils (177) being disposed substantially in electromagnetic space-quadrature relation with respect to magnetic axes of adjacent DC field coils (157), wherein when said respective AC field coils (177) are energized, an alternating current is induced in said polyphase armature winding (124) for providing excitation to said main machine (410).

2. The electric machine (400) defined by claim 1, wherein said stator core (150) is formed of magnetic laminations.

3. The electric machine (400) defined by claim 1, wherein a ratio of the size of the DC salient poles (152) of the plurality of DC salient poles (152) to the size of the AC salient poles (172) of the at least one AC salient pole (172) is selectable in accordance with application requirements for starting and running the main machine (410).

4. The electric machine (400) defined by claim 1, further comprising supplemental AC power supply (175) for providing AC excitation to the at least one AC field winding (162) and a means for providing DC input (184) for providing DC excitation to the at least one DC field winding (122), wherein the supplemental AC power supply (175) is controllably deactivated substantially when the means for providing DC input (184) is activated.

5. An electric machine (400) comprising:
a shaft;
a rotatable armature winding (124) disposed on said shaft;
a stator member (180) having a stator core (150), the stator core (150) including a plurality of salient poles thereon concentrically disposed about and spaced apart from said armature winding (124), said plurality of salient poles including a plurality of DC salient poles (152) and at least one AC salient pole (172), wherein respective AC salient poles (172) of the at least one AC salient pole (172) are disposed between adjacent DC salient poles (152) of the plurality of DC salient poles (152);
a DC field coil (157) disposed on respective DC salient poles (152) of the plurality of DC salient poles (152), said DC field coils (157) being connected together to form a DC field winding (122); and
at least one AC field coil (177) disposed respectively on said at least one AC salient pole (172), the magnetic axes of said at least one AC field coil (177) being disposed substantially in electromagnetic space-quadrature relation with respect to the magnetic axes of said DC field coils (157); and
wherein energizing the AC or DC field coils (157) provide excitation to the electric machine (400) for rotating the shaft.

6. The electric machine (400) defined by claim 5, wherein said stator core (150) is formed of magnetic laminations.

7. The electric machine (400) defined by claim 5, wherein said at least one AC field coil (177) is connected together to constitute an alternate current field winding (162).

8. The electric machine (400) defined by claim 5, wherein a ratio of the size of the DC salient poles (152) of the plurality of DC salient poles (152) to the size of the AC salient poles (172) of the at least one AC salient pole (172) is selectable in accordance with application requirements for starting and running the electric machine (400) .

9. The electric machine (400) defined by claim 5, further including a supplemental AC power supply (175) for providing AC excitation to the AC field winding (162) and means for providing DC input (184) for providing DC excitation to the DC field winding (122), wherein the supplemental AC power supply (175) is controllably deactivated substantially when the means for providing DC input (184) is activated.

10. A method of accelerating a rotor member (170) of a synchronous machine (400) from rest to a predetermined speed of rotation, said method comprising the step of:
exciting an AC winding (162) of an excitation system (412) of said machine (400) with a single phase alternating current for magnetizing at least one AC salient pole (172) supported on a stator of said machine (400), said at least one AC salient pole (172) supporting the AC winding (162), where the polarity of the magnetized at least one AC salient pole (172) varies over time in accordance with the variation of the polarity of the single phase alternating current, for inducing alternating current within a rotor armature winding (124) of said excitation system (412);
rectifying alternating current output by said rotor armature winding (124) for providing direct current;
providing the direct current to a rotor field winding (126)of a main machine (410) of said machine (400) for establishing a static magnetic field;
applying a polyphase alternating current to a stator armature winding (128) of the main machine (410) for establishing a dynamic, rotating magnetic field, where the phase relationship between the static magnetic field and the dynamic, rotating magnetic field causes application of a torque on the rotor member (170)for causing rotation of the rotor member (170); and
continuously increasing the frequency of the applied polyphase alternating current until said rotor member (170) has accelerated to said predetermined speed of rotation.
